# EUROPÄISCHE PATENTSCHRIFT

(11) **EP 0 690 302 B1**
(45) Veröffentlichungstag und Bekanntmachung des Hinweises auf die Patenterteilung: **13.08.1997**
(21) Anmeldenummer: 95109341.8
(22) Anmeldetag: 16.06.1995
(51) Int. Cl.: G01N 1/36, G01N 23/223

(54) **Mittel für die Röntgenfluoreszenzanalyse**
Medium for X-ray fluorescence spectroscopy
Milieu pour la spectroscopie de fluorescence aux rayons X

(30) Priorität: 01.07.1994 DE 9410461 U
(43) Veröffentlichungstag der Anmeldung: 03.01.1996
(73) Patentinhaber: MERCK PATENT GmbH, 64293 Darmstadt (DE)
(72) Erfinder: Wachsmann, Manfred, Dr., D-64739 Höchst (DE); Hirsch, Heidi, D-64331 Weiterstadt (DE)

(56) Entgegenhaltungen:
- US-A- 5 015 479
- US-A- 5 319 097
- CHEMICAL GEOLOGY, Bd. 38, 1983 AMSTERDAM NL, Seiten 225-237, D.A. GALSON ET AL. 'The determination of low concentrations of U, Th, and K by XRF spectroscopy'

## Beschreibung

Die Erfindung betrifft ein Mittel für die Röntgenfluoreszenzanalyse (RFA).

Die Probenvorbereitung spielt bei der RFA eine große Rolle. Metallische Proben sollten auf einer Seite fein abgedreht, eventuell geschliffen oder poliert werden. Metallische Proben, die als Pulver, Späne oder Drähte vorliegen, können umgeschmolzen werden. Oxidische Proben, wie Gesteine, Gläser, Schlacken usw., können pulverisiert werden; sie sollten einheitlich fein vermahlen und eventuell mit einem Binder verpreßt werden. Organische und biologische Proben können verascht werden.

In Chemical Geology 38, 225 (1983) ist die Bestimmung niedriger Konzentrationen von Uran, Thorium und Kalium durch RFA beschrieben. Dabei wird ein fein gemahlenes, homogenisiertes Gesteinspulver mit einigen Tropfen Polyvinylpyrrolidon/Methylcellulose-Binder versetzt und in Form von Tabletten verpreßt und analysiert.

Zur Probenvorbereitung sind im Handel Tabletten aus Kanadabalsam und Cellulose erhältlich, die mit einem Zuckerüberzug versehen sind. Diese Tabletten werden vom Anwender fein vermahlen, mit der zu untersuchenden Probe versetzt, homogenisiert und erneut in Form von Tabletten verpreßt, mit denen dann die RFA durchgeführt wird.

Die Hilfsmittel nach dem Stand der Technik haben erhebliche Nachteile. Kanadabalsam ist z.B. klebrig und deshalb nur schwierig mit Cellulose zu homogenisieren. Wegen der Klebrigkeit muß auch ein Zuckerüberzug aufgebracht werden, was einen zusätzlichen Arbeitsgang erfordert. Tabletten aus Polyvinylpyrrolidon und Methylcellulose sind porös und nicht bruchstabil an den Rändern; ein hoher Verlust durch Abrieb macht sie ungeeignet für automatische Mahl- und Dosieranlagen. Außerdem kann es, bedingt durch die erhöhte Klebewirkung von Methylcellulose, zu einem Verkleben in diesen Anlagen kommen.

Der Erfindung liegt die Aufgabe zugrunde, Mittel für die RFA zur Verfügung zu stellen, die die genannten Nachteile nicht haben, die problemlos zu handhaben sind und bei allen Anwendern vergleichbare, reproduzierbare Ergebnisse liefern.

Gegenstand der Erfindung sind Mittel für die RFA, die aus Polyvinylpyrrolidon mit einem Anteil von 10 bis 80 % mikrokristalliner Cellulose bestehen. Vorzugsweise enthält das Mittel neben Polyvinylpyrrolidon 10 bis 50 % mikrokristalline Cellulose, insbesondere enthält es 75 % Polyvinylpyrrolidon und 25 % mikrokristalline Cellulose.

Das Mittel nach der Erfindung kann direkt als homogenisiertes Gemisch mit der zu untersuchenden Probe vermischt und anschließend verpreßt werden. Dieses Vorgehen bereitet jedoch Dosierungsprobleme. In der Praxis wird das Mittel deshalb vorzugsweise in Form von Tabletten eingesetzt, die über automatische Dosieranlagen einem Mischer zugeführt werden, wo sie fein gemahlen, mit der Probe homogen vermischt und erneut verpreßt werden; mit der so erhaltenen Tablette wird dann die RFA durchgeführt.

Die erfindungsgemäßen Tabletten sollten ein Gewicht im Bereich von 50 bis 2000 mg haben, vorzugsweise 200 bis 300 mg. Eine Tablette von z.B. 250 mg hat etwa folgende Dimensionen: Durchmesser ca. 9 mm, Tablettenstärke etwa 3,6 bis 3,8 mm. Die zur RFA eingesetzten Tabletten, die das erfindungsgemäße Mittel und die Probe in homogener Verteilung enthalten, haben in der Regel einen Durchmesser von 31,5 mm und eine Stärke von 4,5 mm. Das Verhältnis von erfindungsgemäßem Mittel zur Probe beträgt etwa 1:5 bis 1:1.

Das eingesetzte Polyvinylpyrrolidon hat vorzugsweise ein mittleres Molekulargewicht im Bereich von 10 000 bis 40 000 Dalton. Als mikrokristalline Cellulose sind alle entsprechenden Produkte geeignet, die für Tablettierungen im Handel angeboten werden.

### Beispiel

250 g mikrokristalline Cellulose (Avicel, Typ PH-200) und 750 g Polyvinylpyrrolidon (Polyvidon 25) werden zusammengegeben und etwa 2 Stunden lang in einem Mischer gemischt. Von dieser Mischung werden in einer üblichen Tablettenpresse Tabletten hergestellt. Eine Tablette mit einem Durchmesser von 9 mm und einer Stärke von 3,7 mm wiegt 252 mg.

## Patentansprüche

1. Mittel für die Probenvorbereitung zur Röntgenfluoreszenzanalyse, bestehend aus Polyvinylpyrrolidon, das 10 bis 80 Gew.-% mikrokristalline Cellulose enthält.

2. Mittel nach Anspruch 1, dadurch gekennzeichnet, daß es 75 Gew.-% Polyvinylpyrrolidon und 25 Gew.-% mikrokristalline Cellulose enthält.

3. Mittel nach den Ansprüchen 1 und 2, dadurch gekennzeichnet, daß es in Tablettenform vorliegt.

## Claims

1. Agent for the sample preparation for X-ray fluorescence spectroscopy consisting of polyvinylpyrrolidone which contains 10 to 80 weight-% of microcrystalline cellulose.

2. Agent according to claim 1, characterized in that it contains 75 weight-% of polyvinylpyrrolidone and 25 weight-% of microcrystalline cellulose.

3. Agent according to claims 1 and 2, characterized in that it exists in tablet form.

## Revendications

1. Agent pour la préparation d'essai pour la spectroscopie de fluorescence aux rayons X composé de polyvinyl pyrrolidone contenant de 10 à 80 % en poids de cellulose microcrystalline.

2. Agent selon la revendication 1, caracterisé en ce qu'il contient 75% en poids de polyvinyl pyrrolidone et 25% en poids de cellulose microcrystalline.

3. Agent selon les revendications 1 et 2, caracterisé en ce qu'il existe en forme de comprimés.
